# EUROPEAN PATENT APPLICATION

(11) **EP 1 703 383 A1**
(43) Date of publication of application: **20.09.2006**
(21) Application number: 05102146.7
(22) Date of filing: 18.03.2005
(51) Int. Cl.: G06F 9/445

(54) **Electronic device having an alterable configuration and methods of manufacturing and configuring the device**

(71) Applicant: Research In Motion Limited, Waterloo, Ontario N2L 3W8 (CA)
(72) Inventor: Wood, Robert Henderson, Waterloo, Ontario N2L 6B9 (CA); Nguyen, Bao Quoc, Waterloo, Ontario N2T 2T8 (CA)
(74) Representative: Rickard, David John

(57) **Abstract**

An electronic device having an alterable configuration and methods of manufacturing and configuring the same are provided. The electronic device includes a non-volatile memory storing a boot ROM. The boot ROM is operable, when executed by a processor of the electronic device, to boot a first operating system if available in the non-volatile memory and to boot a second operating system in the non-volatile memory if the first operating system is unavailable in the non-volatile memory when the electronic device is powered up.

## Description

The invention relates generally to electronic devices and, more specifically, to an electronic device having an alterable configuration and methods of manufacturing and configuring the same.

The use of operating systems customized for the purpose of electronic device calibration is known. During manufacture, special calibration firmware including a factory operating system ("OS") is programmed or loaded onto a flash memory chip, which is then soldered onto a main circuit board incorporated into an electronic device. The factory OS is customized to facilitate calibration and customization of the device.

Once the calibration and customization of the electronic device is completed, the special calibration firmware is replaced with shipping firmware that includes a shipping OS. It can be desirable to disable or remove the customized special calibration firmware as it can include security holes that are undesirable in the shipping electronic device. The functionality of the shipping OS is generally free of such security holes and complies with standardized specifications that permit interoperability between different electronic devices. For electronic devices having cellular communication functionality, such as mobile phones and two-way wireless email devices, the shipping OS is often customized for a particular network carrier. Such customizations can include, but are not limited to, graphical user interface images, the default settings for certain functionality (e.g. whether a Bluetooth radio is on or off), languages, fonts and the configuration of certain radio features.

A flash utility executing on an external computing device is typically employed to overwrite the contents of the flash memory chip via a universal serial bus ("USB") cable. This process of loading the shipping firmware onto the assembled electronic device is time-consuming, taking two to three minutes. As a result, this stage of production is costly, requiring many computers and operators to be dedicated to this task.

If the final version of the shipping firmware is completed before manufacturing begins, it can be advantageous to load the shipping firmware onto the flash memory chip in place of the factory OS prior to soldering onto the main circuit board. In this case, the shipping firmware generally must include calibration functionality in order to enable the calibration of the electronic device during manufacture. While the shipping firmware no longer needs to be placed into flash memory after assembly, the presence of such functionality in the shipping firmware can introduce security flaws in the electronic device. Further, the shipping firmware that includes the calibration functionality is less time-efficient than the special calibration firmware for calibration and customization of the electronic device.

### Summary

In one aspect of the invention, there is provided an electronic device having an alterable configuration, comprising:
a non-volatile memory storing a boot ROM, said boot ROM being operable, when said boot ROM is executed by a processor of said electronic device, to boot a first operating system if available in said non-volatile memory and to boot a second operating system in said non-volatile memory if said first operating system is unavailable in said non-volatile memory when said electronic device is powered up.

In another aspect of the invention, there is provided a method of manufacturing an electronic device, comprising:
assembling said electronic device using a non-volatile memory, said non-volatile memory storing a boot ROM, said boot ROM being operable to boot a first operating system if available in said non-volatile memory when said electronic device is powered up, said boot ROM being operable to boot a second operating system in said non-volatile memory if said first operating system is unavailable in said non-volatile memory when said electronic device is powered up; and
making said first operating system in said non-volatile memory unavailable.

In a further aspect of the invention, there is provided a method of configuring an electronic device, comprising:
provisioning non-volatile memory of said electronic device having a first operating system and a second operating system, said electronic device being operable to execute said second operating system if available in lieu of said first operating system;
executing said second operating system on said electronic device; and
making said second operating system in said non-volatile memory unavailable.

The invention allows for a second operating system to be loaded onto an electronic device and used until it is no longer required, after which it can be removed.

### Brief Description of the Drawings

Embodiments will now be described, by way of example only, with reference to the attached Figures, wherein:
Figure 1 shows an electronic device in accordance with an aspect of the invention;
Figure 2 is a schematic diagram of the electronic device of Figure 1;
Figure 3 is a schematic diagram of the contents of the non-volatile memory of the electronic device of Figure 1;
Figure 4 illustrates the method of selecting and booting an operating system on the electronic device of Figure 1;
Figure 5 illustrates the method of manufacturing the electronic device of Figure 1;
Figure 6 illustrates the method of making an operating system unavailable during the method of Figure 5;
Figure 7 is a schematic diagram of the contents of the non-volatile memory of the electronic device of Figure 1 after performance of the method of Figure 6; and
Figure 8 illustrates a method of upgrading the operating system on an electronic device, such as the device of Figure 1, in accordance with another embodiment of the invention.

### Details

The invention allows both an interim and a permanent operating system to be loaded onto an electronic device prior to assembly of the device. The operating systems are loaded onto a flash chip prior to assembly of the electronic device by a specialized machine that processes multiple flash chips simultaneously. This process takes approximately thirty (30) seconds. Using this approach, the slower method of loading the shipping OS onto the electronic device using a communication interface of the assembled electronic device, such as a universal serial bus ("USB") port, can be avoided.

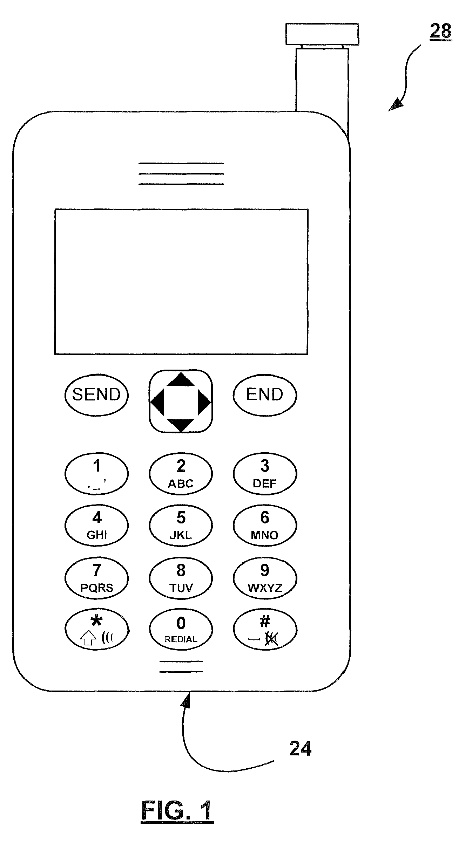

An exemplary electronic device 20 is shown in Figure 1. The electronic device 20 in this case is a cellular telephone capable of two-way voice and data communications. The electronic device 20 is provided with a wired communication interface 28 for wired communication with other computing devices.

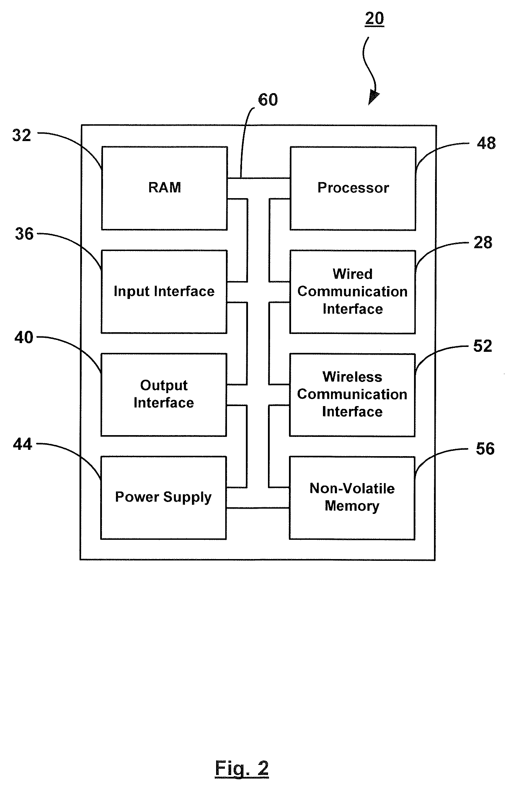

Figure 2 is a schematic diagram showing the block elements of the electronic device 20, including random access memory ("RAM") 32, an input interface 36, an output interface 40, a power supply 44, a processor 48, the wired communication interface 28, a wireless communication interface 52 and non-volatile memory 56, all in communication over a local bus 60. The RAM 32 is volatile memory that is used to store data temporarily during operation of the electronic device 20. The input interface 36 includes a set of keys and controls for composing email messages, adjusting the volume or powering up the electronic device 20, and also includes a microphone for receiving audio commands and communication. The output interface 40 provides, among other things, a visual indication of communications to and from the electronic device 20. The power supply 44 is a rechargeable battery. The processor 48 executes an operating system and other software for operating the electronic device 20. The wired communication interface 28 is a universal serial bus ("USB") port that permits communication with other computing devices via a USB cable and also receives power for charging the rechargeable battery. The wireless communication interface 52 is a cellular communication radio for sending and receiving communications wirelessly.

The non-volatile memory 56 is a flash chip that is pre-loaded with a boot ROM, one or more operating systems and other programs to enable various functionality of the device.

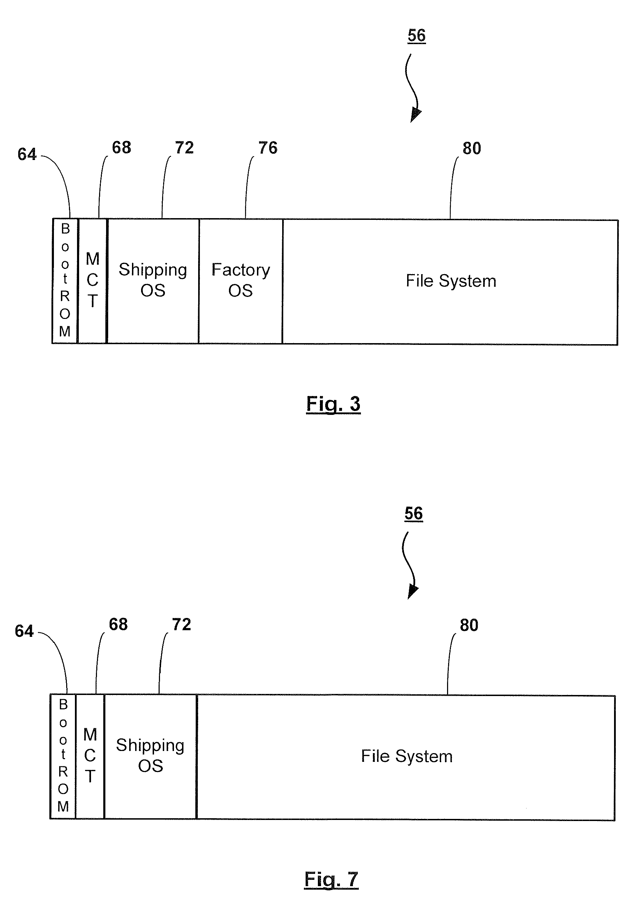

Figure 3 better illustrates the layout of the non-volatile memory 56. The non-volatile memory 56 includes a boot ROM 64, a memory configuration table ("MCT") 68, a shipping OS partition 72, a factory OS partition 76 and a file system partition 80. The boot ROM 64 selects an OS (partition) to be booted on powering up the electronic device 20. For purposes of this discussion, "powering up" also includes the restarting or resetting of the electronic device 20. The boot ROM 64 is always located at the start of the memory address space in the non-volatile memory 56. The MCT 68 is a register of the partitions in the non-volatile memory 56. The shipping OS partition 72 houses the shipping OS that controls the operation of the electronic device 20 in a commercial environment. The factory OS partition 76 houses the factory OS that controls the operation of the electronic device 20 during calibration, etc. The file system partition 76 can include customizations for resellers or end-users, such as languages, fonts, customized logos, ringtones, profiles, etc.

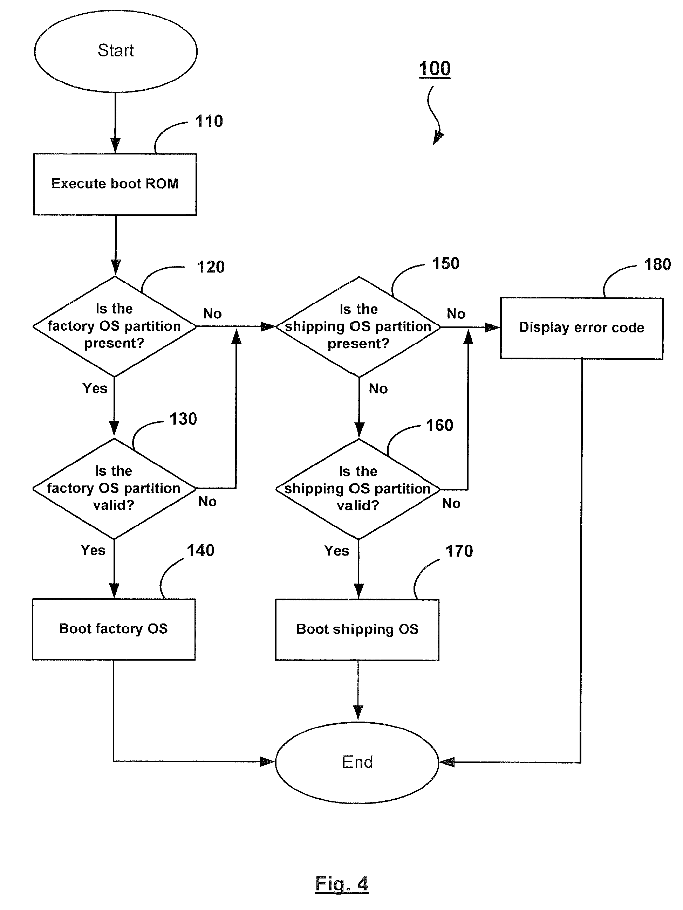

Figure 4 illustrates the method of selecting and booting an operating system, performed by the electronic device 20 generally at 100. Upon powering up, the electronic device 20 executes the boot ROM 64 (step 110). The boot ROM 64 then determines whether the factory OS partition 76 is present (step 120). If the factory OS partition 76 is present, the boot ROM 64 tries to validate the factory OS partition 76 (step 130). If the factory OS partition 76 is validated by the boot ROM 64, the factory OS is booted (step 140). If, instead, the factory OS partition 76 is not validated, or if the factory OS partition 76 is not present, the boot ROM 64 determines whether the shipping OS partition 72 is present (step 150). If the shipping OS partition 72 is present, the boot ROM 64 tries to validate the shipping OS partition 72 (step 160). If the shipping OS partition 72 is authenticated by the boot ROM 64, the shipping OS is booted (step 170). If, instead, the shipping OS partition 72 is not validated, or if the shipping OS partition 72 is not present, the boot ROM 64 displays an error code on the display of the electronic device 20 (step 180). Upon booting either of the factory OS or the shipping OS, or displaying the error code, the method 100 ends.

In order to determine whether the factory OS partition 76 and the shipping OS partition 72 are present at steps 120 and 150 respectively, the boot ROM 64 examines the MCT 68. When partition addition, deletion and modifications are made, the changes are written to the MCT 68.

During the validation of either of the factory OS partition 76 at step 130 and the shipping OS partition 72 at step 160, the boot ROM 64 attempts to locate and authenticate a digital signature in the OS partition. The digital signature includes information pertaining to the contents of the partition that is encrypted using a secret key of a trusted source. A public key corresponding to the secret key is used by the boot ROM 64 to decrypt the information, which is then used to verify that the contents have not been tampered with or otherwise damaged. The authentication is performed in order to reduce the probability that potentially malicious or damaged code is run on the electronic device 20. If the OS partition does not contain a digital signature, the validation fails. If a digital signature is present, the boot ROM 64 determines whether the digital signature corresponds to the public key. If the digital signature does not correspond to the public key, the authentication and, thus, the validation fail. If the digital signature corresponds to the public key, its information is compared to the contents of the OS partition. If the contents of the OS partition do not match the digital signature, the validation fails, otherwise the OS partition is validated.

If neither of the OS partitions are present and validated, the boot ROM 64 refuses to load an OS and displays an error code at step 180.

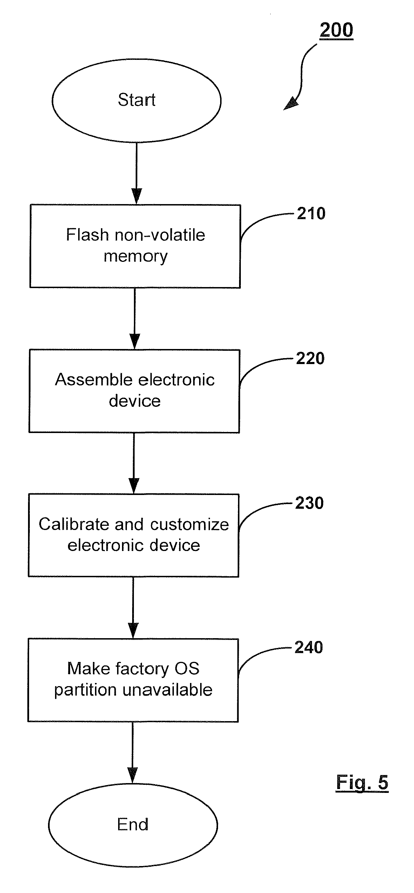

Figure 5 shows the method 200 of manufacturing the electronic device 20. The non-volatile memory 56 is flashed with an image to provide it with the partitions shown in Figure 3 (step 210). The non-volatile memory 56 is then secured by soldering to a main board during assembly of the electronic device 20 (step 220). Once the electronic device 20 is assembled, it is calibrated and customized (step 230). The factory OS partition 76 is then deleted (step 240).

During the flashing or loading of the non-volatile memory 56, a master image of the contents of the non-volatile memory 56 shown in Figure 3 is flashed to the non-volatile memory. A specialized machine processes a number of non-volatile memory chips simultaneously. The specialized machine is able to load the operating systems into the non-volatile memory 56 more rapidly than otherwise possible after assembly. This is due to the relatively slow speed of the wired communication interface 28 (i.e., USB) and the non-volatile memory of the electronic device 20. By directly loading the operating systems onto the non-volatile memory 56, the loading speed is generally only limited by the write speed of the non-volatile memory chip. When the non-volatile memory 56 is programmed directly, a voltage that is higher than otherwise possible can be used. The higher voltage enables programming of the non-volatile memory 56 at approximately twice the speed achieved when the electronic device 20 is assembled.

The factory OS includes a number of modifications that are made to reduce the time required to calibrate and customize the electronic device at step 230. For example, the shipping OS operates the USB wired communication interface 28 at an initial power level of 100 milliamps for a period of time before ramping up to an ultimate power level of 500 milliamps. This is done for compatibility reasons as some computers are equipped to handle only one of the power levels. The factory OS bypasses the initial power level and immediately employs the ultimate power level of 500 milliamps as the computers used during production use this power level for USB connections. In addition, the radios of the wireless communication interface 52 are not operated in accordance with various communication specifications in order to reduce time latencies.

During calibration, gain of the antennas of the wireless communication interface 52 is set, personal identification numbers are assigned, internal voltage references are programmed, audio volumes are calibrated, the display contrast is configured to a suitable default level, etc.

Using the method 100, the factory OS, if present and valid, will have priority over the shipping OS. In order to configure the electronic device 20 to use the shipping OS, the factory OS makes itself unavailable by deleting itself. After the deletion of the factory OS partition 76, the shipping OS will boot when the electronic device 20 is powered up.

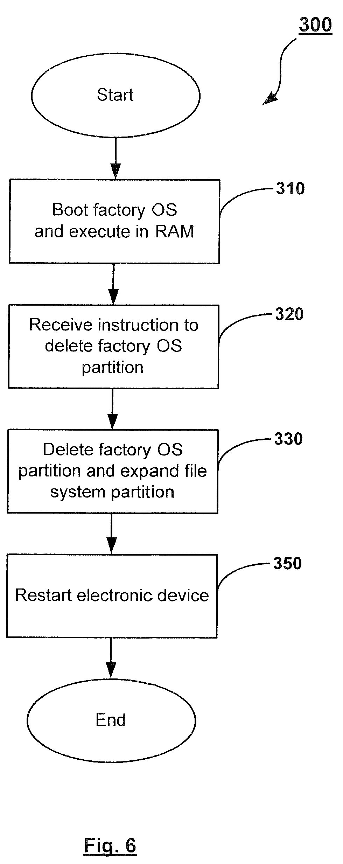

Figure 6 illustrates the method 300 of altering the configuration of the electronic device 20. The factory OS is booted and executed in RAM 32 (step 310). An instruction to delete the factory OS partition 76 is received (step 320). The factory OS partition 76 is deleted and the file system partition 80 is expanded to encompass the memory freed by the deletion of the factory OS partition 76 (step 330). The electronic device 20 is then restarted to verify the correct booting of the shipping OS (step 340).

After being loaded into RAM 32 at step 310, the factory OS provides an interface for receiving an instruction to delete the factory OS partition 76. The instruction is received via the wired communication interface 28.

As the factory OS is executed in RAM 32 when booted, it does not rely on the factory OS partition 76 in non-volatile memory 56 for operation. As a result, the factory OS is able to entirely delete the factory OS partition 76 at step 330 upon receipt of an instruction to do so. In order to delete the factory OS partition 76, the factory OS makes an API call to modify the MCT 68 to remove reference to the factory OS partition 76 and to expand the file system partition 80 to encompass the space previously occupied by the factory OS partition 76.

Upon restarting of the electronic device 20 at step 340, the shipping OS is booted by the boot ROM as a result of method 100. The electronic device 20 operates thereafter as if the factory OS was never present.

### Alternative Embodiment

The invention also provides advantages in performing OS upgrades, such as over-the air ("OTA"). Some systems for updating the OS of an electronic device provide an installer application in the boot ROM that can install a new OS over the OS currently installed on the device. The boot ROM is conditioned into an install mode where it downloads the new OS or retrieves the new OS from a saved location in the file system, and then replaces the current OS with the new OS. The electronic device can thereafter use the new OS. The space available for the boot ROM, however, can be limited. Further, it can be desirable to upgrade the actual installer program itself. In addition, by placing the installer in the boot ROM, space for display drivers is generally unavailable and, thus, information cannot be displayed to a user of the electronic device during the OS upgrade. Using the invention, such OS upgrades can be performed on the electronic device without placing the installer program in the boot ROM 64. Further, the installer can be provisioned with a display driver to present information to the user of the electronic device during the OS upgrade. In addition, the installer can be equipped to handle packages compressed using differing methods.

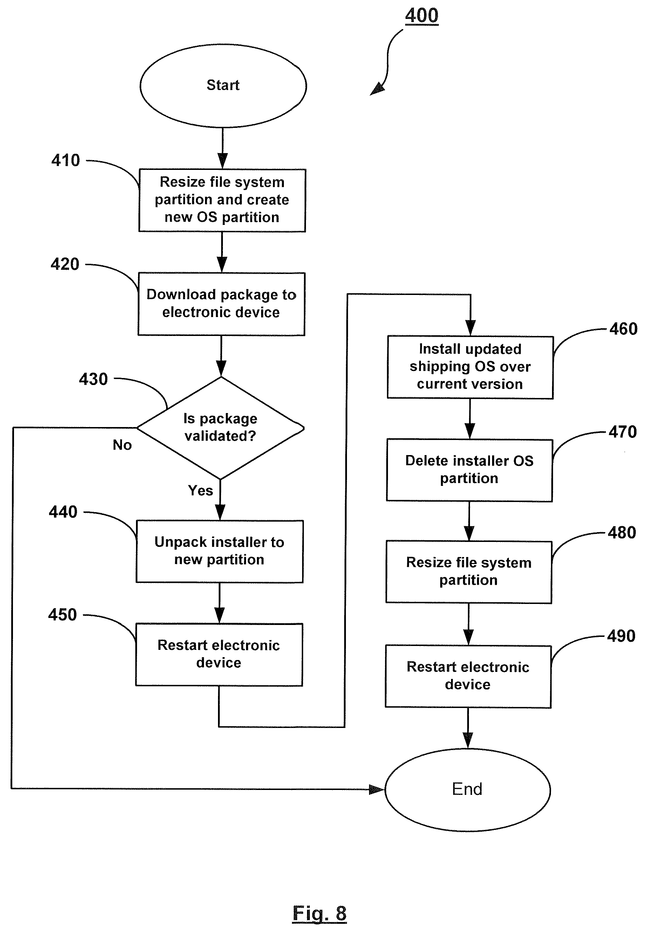

A method of upgrading the OS of an electronic device in accordance with another embodiment of the invention is generally shown at 400 in Figure 8. The file system partition is resized by a down loader application to accommodate a new partition (step 410). A package containing an installer OS is downloaded to the electronic device by the downloader application (step 420). The downloader application validates the package (step 430). If the package is not valid, the method 400 ends. If the package is, instead, valid, the installer OS is then unpacked by the downloader application into the new partition (step 440). The electronic device is then restarted (step 450). Upon restart, the boot ROM recognizes the presence of the second OS (i.e., the installer OS) and boots the installer OS. An installer application in the installer OS unpacks a compressed version of the upgraded shipping OS contained in the installer OS partition and writes it over the current shipping OS (step 460). The installer application, which is executing in RAM, then deletes the installer OS partition (step 470). Once the installer partition has been deleted, the installer application executing in RAM resizes the file system (step 480). The installer application then restarts the electronic device (step 490), after which the method 400 ends. Upon restart, the boot ROM does not find the second OS partition and loads the upgraded shipping OS.

During the resizing of the file system to create a new partition at step 410, a backup copy of the MCT is created to aid in failure recovery. The location of the backup of the MCT is fixed so that the boot ROM is later able to locate it. If the MCT is not modified successfully, the backup copy of the MCT is retrieved by the MCT during failure recovery. During the deletion of the installer OS partition and subsequent resizing of the file system partition, the MCT is modified before the partition resizing/deleting operations are performed to reduce the probability of failure.

In a particular embodiment, the installer OS is downloaded over-the-ai r.

The method 400 can also provide advantages over the method of overwriting the factory OS with the shipping OS via a USB cable. In some cases, it can be faster to download a compressed package containing the shipping OS and have an installer OS decompress and write it over the factory OS than to simply overwrite the factory OS with the shipping OS via the USB cable.

While the making of an operating system unavailable has been described as being performed by deletion, other methods will occur to those skilled in the art. For example, where an OS partition is digitally signed, one or more bits of data can be altered in the OS partition to cause it to become invalidatable.

While the invention has been described with specificity to factory and shipping OSes, other types of OSes will occur to those skilled in the art.

Some or all of an operating system can be upgraded using the invention. The invention enables a partial or complete upgrade of an operating system of an electronic device. As the operating system being modified or replaced is not executing or otherwise being used, the installer can make differing levels of modifications to it.

The above-described embodiments of the invention are intended to be examples of the invention and alterations and modifications may be effected thereto, by those of skill in the art, without departing from the scope of the invention which is defined solely by the claims appended hereto.

## Claims

**1.** An electronic device having an alterable configuration, comprising:
a non-volatile memory storing a boot ROM, said boot ROM being operable, when said boot ROM is executed by a processor of said electronic device, to boot a first operating system if available in said non-volatile memory and to boot a second operating system in said non-volatile memory if said first operating system is unavailable in said non-volatile memory when said electronic device is powered up.

**2.** The electronic device of claim 1, wherein said boot ROM is operable to boot said first operating system if present in said non-volatile memory and boot said second operating system if said first operating system is absent in said non-volatile memory when said electronic device is powered up.

**3.** The electronic device of claim 1 or claim 2, wherein said boot ROM is operable to boot said first operating system if present in said non-volatile memory and valid when said electronic device is powered up and said boot ROM is operable to boot said second operating system in said non-volatile memory if said first operating system is at least one of absent in said non-volatile memory and invalid when said electronic device is powered up.

**4.** The electronic device of any one of claims 1 to 3, wherein said boot ROM is operable to boot said first operating system if present in said non-volatile memory and digitally signed.

**5.** The electronic device of any one of claims 1 to 4, wherein said first operating system, when executed, is operable to make said first operating system in said non-volatile memory unavailable.

**6.** The electronic device of claim 5, wherein said first operating system, when executed, is operable to delete said first operating system in said non-volatile memory.

**7.** The electronic device of claim 6, wherein said first operating system is operable to expand a file system partition in said non-volatile memory to include free memory created by deleting said first operating system.

**8.** A method of manufacturing an electronic device, comprising:
assembling said electronic device using a non-volatile memory, said non-volatile memory storing a boot ROM, said boot ROM being operable to boot a first operating system if available in said non-volatile memory when said electronic device is powered up, said boot ROM being operable to boot a second operating system in said non-volatile memory if said first operating system is unavailable in said non-volatile memory when said electronic device is powered up; and
making said first operating system in said non-volatile memory unavailable.

**9.** The method of claim 8, wherein said boot ROM is operated to boot said first operating system if present in said non-volatile memory and boot said second operating system if said first operating system is absent in said non-volatile memory when said electronic device is powered up.

**10.** The method of claim 8, wherein said boot ROM is operated to boot said first operating system if present in said non-volatile memory and valid when said electronic device is booted and said boot ROM is operated to boot said second operating system if said first operating system is at least one of absent in said non-volatile memory and invalid when said electronic device is powered up.

**11.** The method of any one of claims 8 to 10, wherein said boot ROM is operated to boot said first operating system if present in said non-volatile memory and digitally signed.

**12.** The method of any one of claims 8 to 11, further comprising:
booting said first operating system with said boot ROM when said electronic device is powered up prior to said making said first operating system in said non-volatile memory unavailable.

**13.** The method of any one of claims 8 to 12, further comprising:
loading said boot ROM, said first operating system and said second operating system in said non-volatile memory prior to assembling said electronic device.

**14.** The method of claim 8, wherein said making said first operating system unavailable comprises:
deleting said first operating system in said non-volatile memory.

**15.** The method of claim 14, further comprising:
expanding a file system partition to include space created by said deleting of said first operating system.

**16.** The method of claim 14 or claim 15, wherein said deleting is performed by said first operating system.

**17.** A method of configuring an electronic device, comprising:
provisioning non-volatile memory of said electronic device having a first operating system and a second operating system, said electronic device being operable to execute said second operating system if available in lieu of said first operating system;
executing said second operating system on said electronic device; and
making said second operating system in said non-volatile memory unavailable.

**18.** The method of claim 17, wherein said making said second operating system in said non-volatile memory unavailable comprises deleting said second operating system in said non-volatile memory.

**19.** The method of claim 17 or claim 18, further comprising:
restarting said electronic device.

**20.** The method of any one of claims 17 to 19, further comprising:
replacing at least a portion of said first operating system using said second operating system.

**21.** The method of claim 20, wherein said provisioning comprises:
downloading said second operating system when said first operating system is executing.

**22.** The method of claim 21, wherein said downloading is performed over-the-air.

**24.** A machine readable medium comprising program code means executable on a processor of the electonic device of any one of claims 1 to 7 for implementing the method of any one of claims 17 to 22.

**25.** A combination of the electronic device of any one of claims 1 to 7 and a computing device, said electronic device and computing device being connected by a wired communication interface, wherein said wired communication interface enables the electronic device to communicate with the computing device.

**26.** A communications system comprising at least one electronic device according to any one of claims 1 to 7 and/or the combination of claim 24.
